# EUROPEAN PATENT APPLICATION

(11) **EP 4 318 177 A1**
(43) Date of publication of application: **07.02.2024**
(21) Application number: 22778720.7
(22) Date of filing: 24.03.2022
(51) Int. Cl.: G06F 1/16

(54) **HINGE ASSEMBLY AND ELECTRONIC DEVICE**

(30) Priority: 29.03.2021 CN 202110337194
(71) Applicant: Vivo Mobile Communication Co., Ltd., Dongguan, Guangdong 523863 (CN)
(72) Inventor: LIU, Ya, Dongguan, Guangdong 523863 (CN); WANG, Wei, Dongguan, Guangdong 523863 (CN); LV, Yuehui, Dongguan, Guangdong 523863 (CN); LU, Sifan, Dongguan, Guangdong 523863 (CN); HUANG, Zhijun, Dongguan, Guangdong 523863 (CN)
(74) Representative: Murgitroyd & Company
(86) International application number: PCT/CN2022/082705
(87) International publication number: WO 2022/206537

(57) **Abstract**

The present application proposes a hinge assembly and an electronic device, where the electronic device includes a first section and a second section, and the hinge assembly includes: a support base; a first movable component, where the first movable component is movably connected with the support base, and the first movable component is provided with a first mounting component suitable for connecting with the first section; a second movable component, where the second movable component is movably connected with the support base, the second movable component is disposed opposite to the first movable component, and the second movable component is provided with a second mounting component suitable for connecting with the second component; and a damping assembly, where the damping assembly is provided with a first fitting component and a second fitting component, the first movable component is rotatable around its own axis, so that damping occurs between the damping assembly and the first movable component, and the second movable component is rotatable around its own axis, so that damping occurs between the damping assembly and the second movable component.

## Description

### CROSS-REFERENCE TO RELATED APPLICATION

This application claims priority to Chinese Patent Application No. 202110337194.4, with the China National Intellectual Property Administration on March 29, 2021 and entitled "HINGE ASSEMBLY AND ELECTRONIC DEVICE", which is incorporated herein by reference in its entirety.

### TECHNICAL FIELD

This application belongs to the technical field of electronic device, and in particular relates to a hinge assembly and an electronic device.

### BACKGROUND

In business scenarios such as business reports and blueprint display, large-screen mobile terminals can well meet the needs of business work, but large-screen mobile terminals also bring the problem of inconvenient portability, and the flexible screen folding solution can miniaturize terminal products and better solve the problem of mobility and portability.

The current flexible screen has many problems such as large-area wrinkles after folding, poor reliability, and easy damage to the screen during the folding process. During usage, there are also problems such as unsmooth opening and closing, sudden changes in damping sense, and poor tactile experience, which seriously affect the user experience. At the same time, the hinge structure adopted by the existing folding terminal is relatively complicated. The whole machine is relatively thick, and has defects such as poor manufacturability and high cost, which have seriously affected the development of folding terminals.

### SUMMARY

The present application aims to provide a hinge assembly and an electronic device, which at least solve one of the problems in the background technology.

To resolve the technical problem, this application is implemented as follows.

In a first aspect, the embodiment of the present application proposes a hinge assembly, applied to an electronic device, where the electronic device includes a first section and a second section, and the hinge assembly includes: a support base; a first movable component, where the first movable component is movably connected with the support base, and the first movable component is provided with a first mounting component suitable for connecting with the first section; a second movable component, where the second movable component is movably connected with the support base, the second movable component is disposed opposite to the first movable component, and the second movable component is provided with a second mounting component suitable for connecting with the second section; and a damping assembly, where the damping assembly is provided with a first fitting component and a second fitting component, one of the first movable component and the first fitting component is provided with a first channel, another of the first movable component and the first fitting component is movably fitted in the first channel and abuts against an inner wall surface of the first channel, one of the second movable component and the second fitting component is provided with a second channel, another of the second movable component and the second fitting component is movably fitted in the second channel and abuts against an inner wall surface of the second channel, the first movable component is rotatable around its own axis, so that damping occurs between the damping assembly and the first movable component, and the second movable component is rotatable around its own axis, so that damping occurs between the damping assembly and the second movable component.

In a second aspect, the embodiment of the present application provides an electronic device, including a flexible screen, a first section, a second section, and the hinge assembly described in any of the above-mentioned embodiments, where the first section is connected to the first mounting component, the second section is connected to the second mounting component, and the flexible screen covers the first section, the hinge assembly and the second section.

In the embodiments of the present application, the electronic device can be folded and unfolded by connecting the first mounting component to the first section of the electronic device and connecting the second mounting component to the second section of the electronic device. Besides, through the cooperation of the first movable component, the second movable component and the damping assembly, stable damping is provided, and the folding damping tactile experience is stable during the folding process of the electronic device, bringing better tactile experience to the user of the electronic device.

Additional aspects and advantages of the present invention will be set forth in part in the following description, and will become apparent in part from the following description, or may be learned from practice of the present invention.

### BRIEF DESCRIPTION OF DRAWINGS

The foregoing and/or additional aspects and advantages of the present invention will become apparent and readily understandable from the descriptions of the embodiments with reference to the following accompanying drawings.
FIG 1 is a schematic diagram of a hinge assembly according to an embodiment of the present invention;
FIG 2 is an exploded view of a hinge assembly according to an embodiment of the present invention;
FIG 3 is a partial structural schematic diagram of a hinge assembly according to an embodiment of the present invention;
FIG 4 is a schematic diagram of assembly of a first hinge rotating component and a first fitting component of a hinge assembly according to an embodiment of the present invention;
FIG 5 is a schematic diagram of assembly of a second hinge rotating component and a second fitting component of a hinge assembly according to an embodiment of the present invention;
FIG 6 is a schematic diagram of connection between a first hinge rotating component and a first rotating connecting component of a hinge assembly according to an embodiment of the present invention;
FIG 7 is a schematic diagram of unfolding of a hinge assembly according to another embodiment of the present invention;
FIG 8 is a schematic diagram of folding of a hinge assembly according to another embodiment of the present invention;
FIG 9 is an exploded view of a hinge assembly according to another embodiment of the present invention;
FIG 10 is a schematic diagram of a positional relationship among a first rotation axis, a second rotation axis, a third rotation axis, and a fourth rotation axis of a hinge assembly according to an embodiment of the present invention;
FIG 11 is a partial structural schematic diagram of a hinge assembly according to an embodiment of the present invention;
FIG 12 is a partial structural schematic diagram of a hinge assembly according to an embodiment of the present invention;
FIG 13 is a partial cross-sectional view of a hinge assembly according to another embodiment of the present invention;
FIG 14 is a partial structural schematic diagram of a hinge assembly according to an embodiment of the present invention;
FIG 15 is a partial structural schematic diagram of a damping assembly of a hinge assembly according to an embodiment of the present invention;
FIG 16 is a schematic structural diagram of an electronic device according to an embodiment of the present invention;
FIG 17 is an exploded view of an electronic device according to an embodiment of the present invention; and
FIG 18 is a schematic structural diagram of an electronic device according to another embodiment of the present invention.

Reference numerals in the accompanying drawings are as follows:
hinge assembly 100;
support seat 10; support seat main body 11; driven gear seat 12; arc track 13;
first movable component 20; first mounting component 21; first plane 22; first hinge rotating component 23; first rotating connecting component 24; first rotating shaft 25; second rotating shaft 26; latch 27; curved groove 28; fitting groove 29;
second movable component 30; second mounting component 31; second plane 32; second hinge rotating component 33; second rotating connecting component 34; third rotating shaft 35; fourth rotating shaft 36;
damping assembly 40; first fitting component 41; second fitting component 42; first channel 43; second channel 44; first opening 45; second opening 46;
first transmission component 50;
second transmission component 60;
third transmission component 70; third transmission gear 71; fourth transmission gear 72;
first housing 201;
second housing 202.

### DESCRIPTION OF EMBODIMENTS

The following describes in detail the embodiments of the present invention. Examples of the embodiments are illustrated in the accompanying drawings. Reference numerals which are the same or similar throughout the accompanying drawings represent identical or similar elements or elements having identical or similar functions. The embodiments described below with reference to the accompanying drawings are exemplary, and are only intended to explain the present invention and should not be understood as a limitation of the present invention. All other embodiments obtained by a person of ordinary skill in the art based on the embodiments of this application without creative efforts shall fall within the protection scope of this application.

Features of terms "first" and "second" in the specification and claims of this application may explicitly or implicitly include one or more such features. In the description of the present invention, unless otherwise specified, "a plurality of" means at least two. In addition, in the specification and the claims, "and/or" represents at least one of connected objects, and a character "/" generally represents an "or" relationship between associated objects.

In the description of the present invention, it should be understood that terms "center", "longitudinal", "lateral", "length", "width", "thickness", "up", "down", "front", "back", "left", "right", "vertical", "horizontal", "top", "bottom", "inner", "outer", "clockwise", "counterclockwise", "axial", "radial", "circumferential", and the like indicate orientations or position relationships based on the orientations or position relationships shown in the drawings, and are only for ease of describing the present invention and simplifying the description, rather than indicating or implying that the apparatus or element must have a specific orientation, be configured and operated in a specific orientation, and therefore cannot be understood as a limitation of the present invention.

In the description of the present invention, it should be noted that, unless expressly specified and defined otherwise, terms such as "mounted", "connected to each other", and "connected to" should be understood in a broad sense. For example, "connection" may be a fixed connection, a detachable connection, or an integral connection; or may be a mechanical connection or an electrical connection; or may be a direct connection, an indirect connection through an intermediate medium, or a connection between two elements. A person of ordinary skill in the art may understand specific meanings of the above terms in the present invention based on a specific situation.

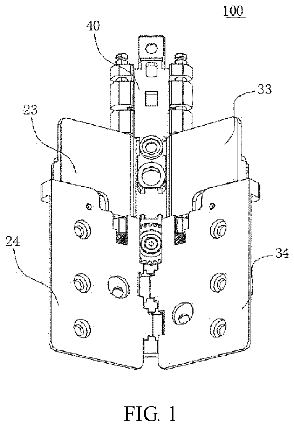

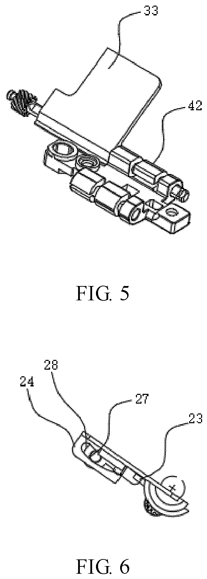

A hinge assembly 100 of an electronic device according to an embodiment of the present invention will be described below with reference to FIG 1 to FIG 15.

The hinge assembly 100 of the electronic device according to the embodiment of the present invention is applied to an electronic device, the electronic device includes a first section and a second section, and the hinge assembly 100 includes: a support base 10, a first movable component 20, a second movable component 30 and a damping assembly 40, and the electronic device includes a first section and a second section.

Specifically, the first movable component 20 is movably connected with the support base 10, and the first movable component 20 is provided with a first mounting component 21 suitable for connecting with the first section; the second movable component 30 is movably connected with the support base 10. The second movable component 30 is disposed opposite to the first movable component 20, and the second movable component 30 is provided with a second mounting component 31 suitable for connecting with the second section. And the damping assembly 40 is provided with a first fitting component 41 and a second fitting component 42, one of the first movable component 20 and the first fitting component 41 is provided with a first channel 43, another of the first movable component 20 and the first fitting component 41 is movably fitted in the first channel 43 and abuts against an inner wall surface of the first channel 43. One of the second movable component 30 and the second fitting component 42 is provided with a second channel 44, another of the second movable component 30 and the second fitting component 42 is movably fitted in the second channel 44 and abuts against an inner wall surface of the second channel 44. The first movable component 20 is rotatable around its own axis, so that damping occurs between the damping assembly 40 and the first movable component 20, and the second movable component 30 is rotatable around its own axis, so that damping occurs between the damping assembly 40 and the second movable component 30.

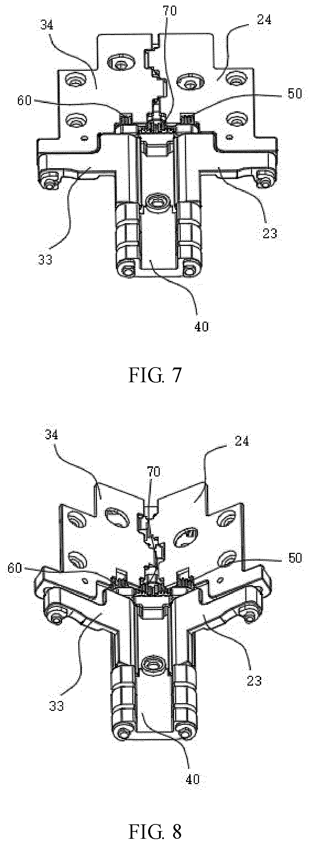

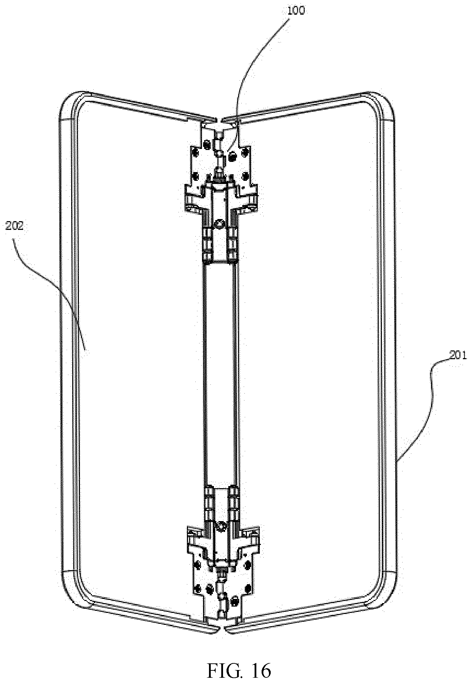

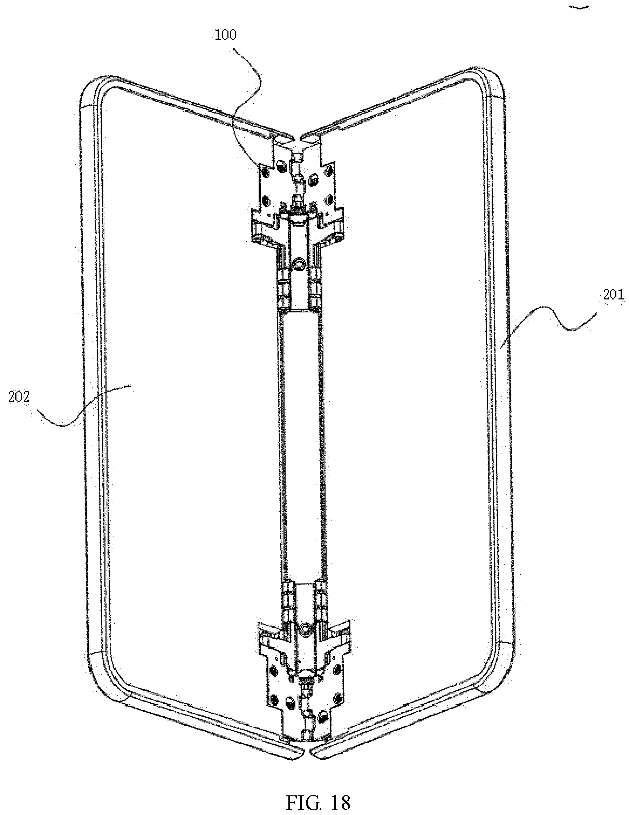

In other words, as shown in FIG 1 and FIG 7, the hinge assembly 100 of the electronic device according to the embodiment of the present invention is mainly composed of a support base 10 capable of supporting, a first movable component 20 movably connected with the support base 10, a second movable component 30 movably connected with the support base 10, and a damping assembly 40 respectively connected with the first movable component 20 and the second movable component 30. As shown in FIG 16 and FIG 18, the electronic device includes a first section and a second section. For example, a foldable flexible terminal device may form the first section and the second section during the folding process. When the hinge assembly 100 is in a flat state, the flexible screen mounted on the hinge assembly 100 can be flattened for reading and writing. When the hinge assembly 100 is in a bent state, the flexible terminal device mounted on the hinge assembly 100 can be folded to reduce the size of the flexible terminal device. The hinge assembly 100 of the present application can drive the flexible screen to fold and bend. It should be noted that the hinge assembly 100 of the present application can not only be applied to flexible terminal devices such as flexible screens, but also can be used in other structures of electronic devices that require folding and unfolding operations.

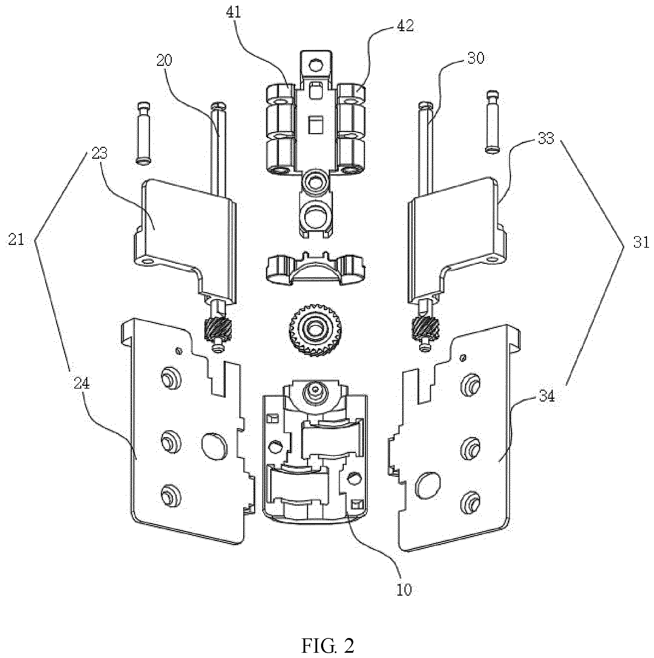

In addition, as shown in FIG 2, a first mounting component 21 is provided on the first movable component 20, and the connection between the first movable component 20 and the first section can be realized through the first mounting component 21. A second mounting component 31 is provided on the second movable component 30, and the connection between the second movable component 30 and the second section can be realized through the second mounting component 31. Since the first movable component 20 and the second movable component 30 are respectively rotatable around their own axes, during the rotation of the first movable component 20, the first mounting component 21 can also rotate, thereby driving the first section to rotate, or when the first section rotates, the first mounting component 21 can also rotate, thereby driving the first movable component 20 to rotate. The rotation process of the second movable component 30 is the same as that of the first movable component 20, and will not be repeated here.

Optionally, as shown in FIG 16 to FIG 18, the first section includes a first housing 201, and the first mounting component 21 is connected with the first housing 201 to drive the first housing 201 to move. The second section includes a second housing 202, and the second mounting component 31 is connected with the second housing 202 to drive the second housing 202 to move. During installation, the hinge assembly 100 may be connected with the first housing 201 or the second housing 202 by screws, riveting, welding or other methods. Through the hinge assembly 100, the first housing 201 and the second housing 202 can be folded together at multiple angles, and can also be flattened into a flat terminal device, for example, equipped with a flexible screen to form a foldable flexible terminal.

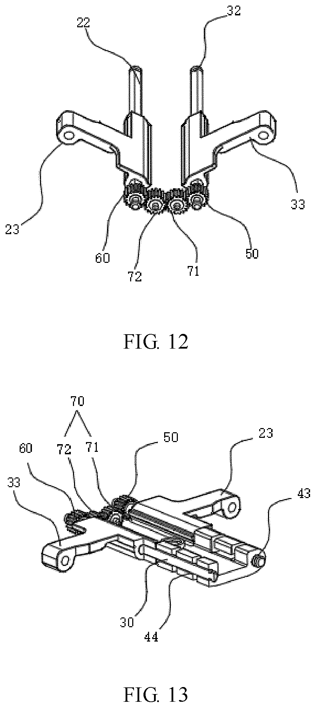

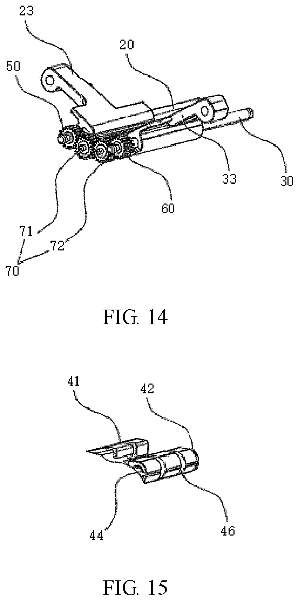

As shown in FIG 1 to FIG 18, a damping assembly 40 is provided on one side of the support base 10, and as shown in FIG 15, a first fitting component 41 and a second fitting component 42 are provided on the damping assembly 40. The first fitting component 41 corresponds to the first movable component 20, and a first channel 43 is provided on one of the first fitting component 41 and the first movable component 20. For example, as shown in FIG 13, a first channel 43 is provided on the first fitting component 41, and at this time, a part of the first movable component 20 can be plugged into the first channel 43. Alternatively, a first channel 43 is provided on the first movable component 20, and at this time, a part of the first fitting component 41 can be plugged into the first channel 43. Likewise, the second fitting component 42 corresponds to the second movable component 30, and a second channel 44 is provided on one of the second fitting component 42 and the second movable component 30. For example, as shown in FIG 13, a second channel 44 is provided on the second fitting component 42, and at this time, a part of the second movable component 30 can be plugged into the second channel 44. Alternatively, a second channel 44 is provided on the second movable component 30, and at this time, a part of the second fitting component 42 can be plugged into the second channel 44.

It should be noted that at least a part of the first movable component 20 plugged into the first channel 43 can abut against the inner wall surface of the first channel 43, so that sliding friction is formed between the inner wall surfaces of the first movable component 20 and the first channel 43. The first movable component 20 may partially abut against the inner wall surface of the first channel 43, or interference fit is formed between the two. When the first movable component 20 rotates, frictional force will be generated between the inner wall surface of the first channel 43 and the outer wall surface of the plugging part to form a torque. Similarly, frictional force will be generated between the inner wall surface of the second channel 44 and the outer wall surface of the corresponding plugging part to form a torque. Optionally, as shown in FIG 8, the relative positional relationship between the first movable component 20 and the first fitting component 41 can be defined by a snap spring. Specifically, the plugging part that extends out of the first channel 43 can be connected to the snap spring to prevent the plugging part from falling off the first channel 43.

In the following, the first channel 43 provided on the first fitting component 41 and the second channel 44 provided on the second fitting component 42 are taken as an example to describe in detail.

As shown in FIG 1 to FIG 6, a damping assembly 40 is provided on one side of the support base 10, and a first channel 43 and a second channel 44 are respectively provided on the damping assembly 40. The first channel 43 corresponds to the first movable component 20, and the second channel 44 corresponds to the second movable component 30. Specifically, a part of the first movable component 20 is plugged into the first channel 43, and the first movable component 20 is in shaft hole fitting with the first channel 43. Since a part of the first movable component 20 abuts against the inner wall surface of the first channel 43, when the first movable component 20 rotates around its own axis, torque damping can be generated between the first movable component 20 and the inner wall surface of the first channel 43. The torque damping can be transmitted to the rotating first mounting component 21 and the first section, and the body of the user in contact with the first section can feel the rotation resistance, which is beneficial to control the rotation of the first section.

It should be noted that, for the torque damping form of circumferential friction, the torque value is usually constant, which can maintain constant damping feel. Compared with other forms of torque mechanisms, the hinge assembly 100 of the present application is not prone to sudden changes in torque values. That is, the torque structure in the form of circumferential friction provides stable torque, and the magnitude of the torque remains consistent during the opening and closing process, which improves the user folding experience.

Thus, according to the hinge assembly 100 of the electronic device according to the embodiment of the present invention, the electronic device can be folded and unfolded by connecting the first mounting component 21 to the first section of the electronic device and connecting the second mounting component 31 to the second section of the electronic device. Besides, through the cooperation of the first movable component 20, the second movable component 30 and the damping assembly 40, stable damping is provided, and the folding damping tactile experience is stable during the folding process of the electronic device, bringing better tactile experience to the user of the electronic device.

Optionally, the first fitting component 41 and the second fitting component 42 can be separated independently, or can be connected as a whole.

According to one embodiment of the present invention, as shown in FIG 13 and FIG 15, the first movable component 20 is a first cylindrical rotating shaft, and the first fitting component 41 is provided with a first channel 43, and the inner diameter of the first channel 43 is smaller than the outer diameter of the first cylindrical rotating shaft. The damping assembly 40 is provided with a first opening 45 communicating with the first channel 43, and the first movable component 20 passes through the first channel 43 to form interference fit. It should be noted that, by defining the relative size relationship between the inner diameter of the first channel 43 and the outer diameter of the first cylindrical rotating shaft, and opening the first opening 45 on the damping assembly 40, weak interference pressing with the first cylindrical rotating shaft can be achieved, the first cylindrical rotating shaft can be deformed, and the damping assembly 40 and the first cylindrical rotating shaft are tightly hugged to each other. When the first cylindrical rotating shaft rotates, the outer side surface of the first cylindrical rotating shaft and the inner wall surface of the first channel 43 rub against each other to form damping feel.

As shown in FIG 13 and FIG 15, the second movable component 30 is a second cylindrical rotating shaft, the second fitting component 42 is provided with the second channel 44, the inner diameter of the second channel 44 is smaller than the outer diameter of the second cylindrical rotating shaft, and the damping assembly 40 is provided with a second opening 46 communicating with the second channel 44. The outer side surface of the second movable component 30 and the inner wall surface of the second channel 44 rub against each other to form damping feel, which will not be described in detail here.

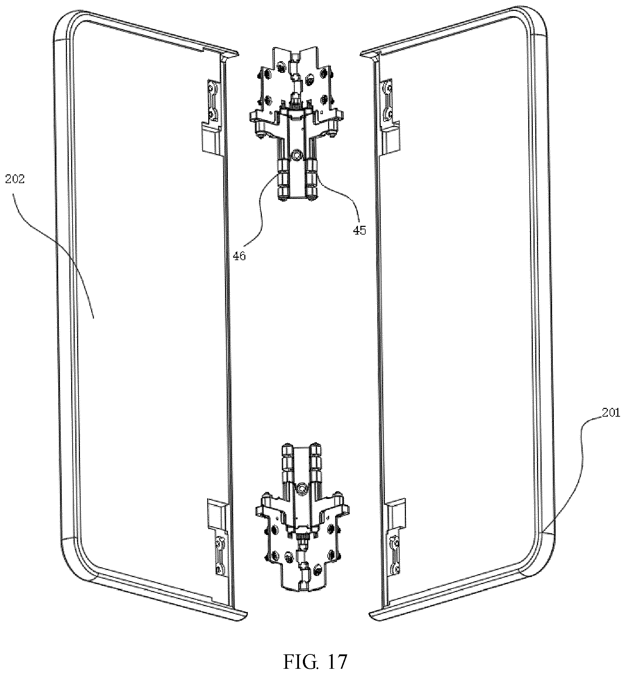

Optionally, as shown in FIG 15 and FIG 17, the first opening 45 passes through the first channel 43 along the axial direction of the first channel 43, and the extrusion force received by each position in the axial direction of the first cylindrical rotating shaft is relatively constant, so that the stability of the damping between the first cylindrical rotating shaft and the damping assembly 40 can be further improved. The second opening 46 passes through the first channel 43 along the axial direction of the second channel 44, which can also improve the stability of the damping between the second cylindrical rotating shaft and the damping assembly 40.

In some specific implementations of the present invention, as shown in FIG 12, a first plane 22 is formed on the outer peripheral surface of the first cylindrical rotating shaft through edge-cutting, and the cross-section of the first cylindrical rotating shaft is in a major arc arch shape. A second plane 32 is formed on the outer peripheral surface of the second cylindrical rotating shaft through edge-cutting, and the cross-section of the second cylindrical rotating shaft is in a major arc arch shape. The contact area between the outer peripheral surface of the first cylindrical rotating shaft and the damping assembly 40 can be reduced by setting the first plane 22, thereby reducing the damping force between the first cylindrical rotating shaft and the damping assembly 40. Likewise, the damping force between the second cylindrical rotating shaft and the damping assembly 40 can be reduced by setting the second plane 32.

According to an embodiment of the present invention, as shown in FIG 2, FIG 3, FIG 8 and FIG 9, the hinge assembly 100 further includes a transmission component, and the transmission component includes a first transmission component 50, a second transmission component 60 and a third transmission component 70, the first transmission component 50 is disposed on the first movable component 20 and moves synchronously with the first movable component 20, the second transmission component 60 is disposed on the second movable component 30 and moves synchronously with the second movable component 30, the third transmission component 70 is disposed on the support base 10, and the third transmission component 70 is fitted with the first transmission component 50 and the second transmission component 60, so that the first transmission component 50 and the second transmission component 60 move synchronously.

For example, the first transmission component 50 and the second transmission component 60 may be connected to form a transmission relationship through a gear, a worm and gear or a rack and pinion, and the third transmission component 70 may be located between the first transmission component 50 and the second transmission component 60.

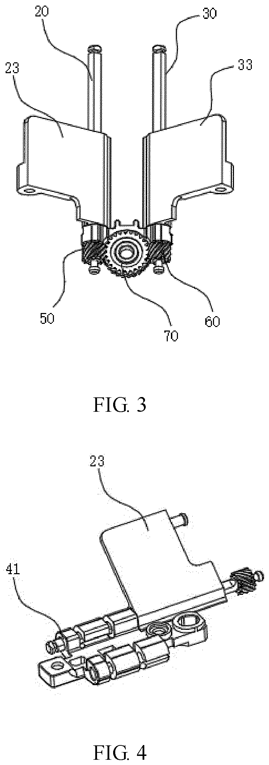

Optionally, as shown in FIG 2 and FIG 3, the first transmission component 50 and the second transmission component 60 are gears arranged in parallel, the third transmission component 70 is a gear, and the axis of the third transmission component 70 is perpendicular to axes of the first transmission component 50 and the second transmission component 60. Optionally, as shown in FIG 3, the first transmission component 50 is provided with first meshing teeth, the second transmission component 60 is provided with second meshing teeth, the first meshing teeth extend obliquely relative to the axis of the first transmission component 50, and the second meshing teeth extend obliquely relative to the axis of the second transmission component 60. Specifically, the first transmission component 50 and the second transmission component 60 are in transmission connection through a helical gear structure. The first transmission component 50 and the second transmission component 60 have their own ring gears, and the ring gears can be a structure formed when the first transmission component 50 is integrally processed or a structure formed by disassembling and assembling.

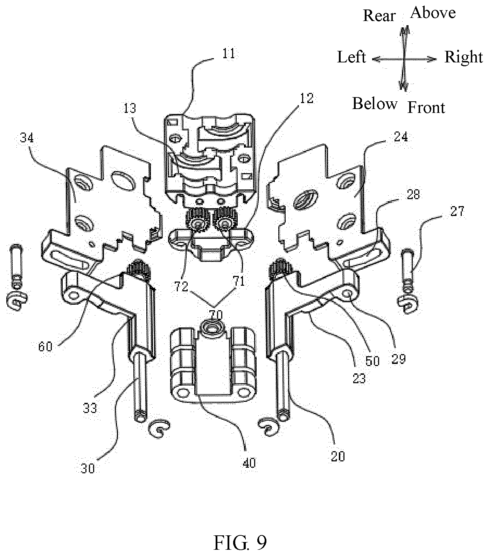

In some specific implementations of the present invention, as shown in FIG 8 and FIG 9, the first transmission component 50 is a first transmission gear, and the second transmission component 60 is a second transmission gear. The first transmission gear can be used as a driven spur gear, and can be located on a side of the support base 10 close to the damping assembly 40. The third transmission component 70 includes a third transmission gear 71 and a fourth transmission gear 72 meshing with each other, the third transmission gear 71 meshes with the first transmission gear, and the fourth transmission gear 72 meshes with the second transmission gear. The third transmission component 70 is disposed on the support seat 10, and the support seat 10 can support the third transmission component 70.

Optionally, as shown in FIG 9, the support seat 10 includes a support seat main body 11 and a driven gear seat 12, the driven gear seat 12 is disposed on a side of the support seat main body 11 adjacent to the damping assembly 40, and the support seat main body 11 and the driven gear seat 12 both can support the first transmission component 50 and the second transmission component 60.

According to an embodiment of the present invention, as shown in FIG 9, axes of the first transmission gear, the second transmission gear, the third transmission gear 71 and the fourth transmission gear 72 are parallel to each other. Utilizing the synchronization feature of gear rotation can ensure that the gear movements of the third transmission gear 71 and the fourth transmission gear 72 are synchronized.

Optionally, as shown in FIG 9, the third transmission gear 71 and the fourth transmission gear 72 are spur gears. When the first movable component 20 or the second movable component 30 rotates, the third transmission gear 71 and the fourth transfer gear 72 are driven by the gear engagement to rotate. Due to the synchronicity of the spur gears, the third transmission gear 71 and the fourth transmission gear 72 rotate at the same speed to realize the rotation synchronization of the first movable component 20 and the second movable component 30. Furthermore, since the first movable component 20 is connected to the first housing 201 and the second movable component 30 is connected to the second housing 202, the first housing 201 and the second housing 202 can rotate synchronously. When the structure of spur gears is adopted, the processing of spur gears is simpler than that of helical gears, and has the advantages of low precision requirements and low cost.

In some specific embodiments of the present invention, as shown in FIG 1 to FIG 18, the first mounting component 21 or the second mounting component 31 further includes: a hinge rotating component and a rotating connecting component, and the hinge rotating component is disposed on the first movable component 20 or the second movable component 30, and the rotating connecting component is respectively connected with the hinge rotating component, the first section or the second section of the electronic device, and the support seat 10. For ease of description, the hinge rotating component corresponding to the first mounting component 21 is defined as the first hinge rotating component 23, and the rotating connection component corresponding to the first mounting component 21 is defined as the first rotating connecting component 24. The hinge rotating component corresponding to the second mounting component 31 is defined as the second hinge rotating component 33, and the rotating connection component corresponding to the second mounting component 31 is defined as the second rotating connecting component 34.

The following takes the first mounting component 21 as an example for description.

As shown in FIG 1 to FIG 6, the first mounting component 21 also includes a first hinge rotating component 23 and a first rotating connecting component 24, the first hinge rotating component 23 is connected with the first movable component 20, and the first rotating connecting component 24 is respectively connected with the first section, the first hinge rotating component 23 and the support base 10.

The first hinge rotating component 23 and the first rotating connecting component 24 may be connected by a cam, a ring gear or a connecting rod, and only a cam connection is shown in FIG 1, FIG 3, FIG 8 and FIG 10. The positional relationship between the first hinge rotating component 23 and the first rotating connecting component 24 can be a vertically stacked structure or a front-to-rear arrangement structure, and only a front-rear arrangement structure is shown in FIG 1, FIG 3, FIG 8 and FIG 10.

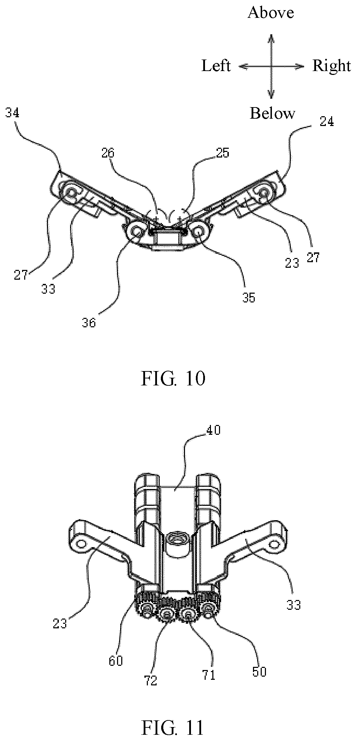

As shown in FIG 9 and FIG 10, an arc track 13 can be provided on the upper end surface of the support base main body 11, a part of the lower left end of the first rotating connecting component 24 can be set in the arc track 13, and can rotate along the wall surface of the arc track 13, and this virtual rotation axis is defined as a first rotation axis 25. That is, the first rotating connecting component 24 rotates around the first rotating shaft 25. At this time, the first rotating connecting component 24 may be located below the first rotating shaft 25.

As shown in FIG 9, the front end of the first hinge rotating component 23 can be provided with the first movable component 20, and the rear left part of the first hinge rotating component 23 can be movably connected with the first rotating connecting component 24. The first movable component 20 can rotate around its own axis, that is, when the first hinge rotating component 23 rotates, it can rotate around the axis of the first movable component 20. For ease of description, the rotation axis center of the first hinge rotating component 23 is defined as the second rotating shaft 26, and the first hinge rotating component 23 can rotate around the second rotating shaft 26. At this time, the first hinge rotating component 23 can be located below the first rotating shaft 25.

Similarly, the rotation axis center of the second rotating connecting component 34 is defined as the third rotating shaft 35, the second rotating connecting component 34 can rotate around the third rotating shaft 35, and the second rotating connecting component 34 is located below the third rotating shaft 35. The rotation axis center of the second hinge rotating component 33 is defined as the fourth rotating shaft 36, the second hinge rotating component 33 rotates around the fourth rotating shaft 36, and the second hinge rotating component 33 can be located below the third rotating shaft 35.

It should be noted that, as shown in FIG 10, the axis centers of the first hinge rotating component 23 and the first rotating connecting component 24 are different. Specifically, the first rotating connecting component 24 can be fitted with the arc track 13 to achieve position limitation and can only serve for rotation. When the first rotating connecting component 24 rotates in the arc track 13 centered on the first rotating shaft 25, because the first rotating connecting component 24 and the first hinge rotating component 23 are connected by the latch 27, the first rotating connecting component 24 can rotate with the first hinge rotating component 23, but the rotation center of the first hinge rotating component 23 is the second rotation axis 26. It should be noted that, by adopting the design of different axis centers, the rotation center of the first hinge rotating component 23 can be flexibly adjusted according to the stacking of the folding screen, which solves the internal stress problem existing in the folding process of the flexible screen, and at the same time reduces the wrinkles and improves the reliability of the foldable terminal and the user experience.

Optionally, as shown in FIG 16 to FIG 18, the first housing 201 and the first rotating connection component 24 may be integrated into one body through mechanical means, such as screw, buckle, welding and other means. FIG 16 to FIG 18 only illustrate the connection method using screws, and the number of screw connections is not limited. As shown in FIG 10, the first housing 201 rotates around the first rotation axis 25, and the first rotation axis 25 is located above the first housing 201.

Likewise, the second housing 202 and the second rotating connection component 34 are integrated into one body through mechanical means, such as screw, buckle, welding and other means. FIG 16 to FIG 18 only illustrate the connection method using screws, and the number of screw connections is not limited. As shown in FIG 10, the second housing 202 rotates around the third rotation axis 35, and the third rotation axis 35 is located above the second housing 202.

Optionally, as shown in FIG 13, the transmission component and the first hinge rotating component 23 and the second hinge rotating component 33 are arranged eccentrically. That is, considering the gap between the transmission component and the flexible screen after folding, the transmission component, the first hinge rotating component 23 and the second hinge rotating component 33 are arranged eccentrically, and the center of the transmission component is below the line connecting the centers of the first hinge rotating component 23 and the second hinge rotating component 33.

It should be noted that the usage of helical gear transmission mechanism and the eccentric layout scheme improves the coincidence degree of the gears, thereby improving the synchronization of the folding process of the first housing 201 and the second housing 202, and also reducing the thickness dimension of the hinge assembly 100 and realizing miniaturized design.

Optionally, as shown in FIG 1, the damping assembly 40 can be fixed on the support seat 10 or the housing and remain stationary, and the axis of the first hinge rotating component 23 rotates around the first fitting component 41 and generate frictional force through interference to form torque. Similarly, the axis of the second hinge rotating component 33 can also rotate around the second fitting component 42 and generate frictional force through interference to form torque.

Optionally, the first hinge rotating component 23 and the first rotating connecting component 24 may be connected by a latch 27, and the latch 27 can ensure that the first hinge rotating component 23 and the first rotating connecting component 24 move synchronously. Specifically, as shown in FIG 9, an arc groove 28 is provided at the front end of the first rotating connecting component 24, a fitting groove 29 is provided at the rear end of the first hinge rotating component 23, the rear end of the latch 27 is plugged into the arc groove 28, and the front end of the latch 27 is plugged into the fitting groove 29. It should be noted that the front end of the latch 27 can be fixedly connected with the first hinge rotating component 23, the rear end of the latch 27 can be movably connected with the first rotating connecting component 24, and the latch 27 can move along the extending direction of the arc groove 28.

Optionally, as shown in FIG 2, the connection between the latch 27 and the first hinge rotating component 23 can be realized by a snap spring to prevent the latch 27 from falling off. Specifically, the fitting groove 29 is a through groove, and the front end of the latch 27 passes through the through groove. The snap spring is positioned outside the through groove, and the latch 27 can be fixed in the through groove by the snap spring.

Optionally, the rotation of the first rotating connecting component 24 can be transmitted to the third transmission gear 71 through cooperation of the latch 27, the first rotating connecting component 24 and the first hinge rotating component 23.

Optionally, as shown in FIG 1, a part of the first rotating connecting component 24 can be made into a plane, so that other components of the electronic device can be embedded on the first rotating connecting component 24. When the first rotating connecting component 24 rotates, other parts fixed on the first rotating connecting component 24 can rotate together.

It should be noted that the second mounting component 31 has the same structure as the first mounting component 21 and can achieve the same technical effect. To avoid repetition, details are not repeated here.

The present invention also provides an electronic device, including a flexible screen, a first section, a second section, and the hinge assembly 100 of any one of the above-mentioned embodiments. The electronic device includes a first section and a second section, the first section is connected to the first mounting component 21, the second section is connected to the second mounting component 31, and the flexible screen covers the first section, the hinge assembly 100 and the second section.

The first section may include a first housing 201 and the second section may include a second housing 202. The number of hinge assemblies 100 can be two groups, and the two groups of hinge assemblies 100 can be respectively placed on both sides of the folding axis of the electronic device, and the hinge assemblies 100 can be located below the foldable screen. It should be noted that the number of hinge assemblies 100 is not limited to two groups, and may also be multiple groups. Only two groups of hinge assemblies 100 are illustrated in FIG 16 to FIG 18.

It should be noted that the embodiment of the present invention only schematically illustrates the U-shaped folding terminal, and the hinge assembly 100 of the embodiment of the present application may also be used in a three-fold or multi-layer folding terminal.

Other configurations of the electronic device according to the embodiments of the present invention, such as a flexible screen, and operations are known to those skilled in the art, and will not be described in detail here.

In the description of this specification, the description with reference to terms such as "an embodiment", "some embodiments", "a schematic embodiment", "an example", "a specific example", or "some examples" means that specific features, structures, materials, or characteristics described in combination with the embodiments or examples are included in at least one embodiment or example of the present invention. In this specification, the schematic descriptions of the above terms do not necessarily refer to the same embodiment or example. Moreover, the specific features, structures, materials, or characteristics described may be combined in a proper way in any one or more embodiments or examples.

Although the embodiments of the present invention have been shown and described, those of ordinary skill in the art can understand that various changes, modifications, replacements, and variants may be made to these embodiments without departing from the principle and purpose of the present invention, and the scope of the present invention is limited by the claims and their equivalents.

## Claims

1. A hinge assembly, applied to an electronic device, wherein the electronic device includes a first section and a second section, and the hinge assembly comprises:
a support base;
a first movable component, wherein the first movable component is movably connected with the support base, and the first movable component is provided with a first mounting component suitable for connecting with the first section;
a second movable component, wherein the second movable component is movably connected with the support base, the second movable component is disposed opposite to the first movable component, and the second movable component is provided with a second mounting component suitable for connecting with the second section; and
a damping assembly, wherein the damping assembly is provided with a first fitting component and a second fitting component, one of the first movable component and the first fitting component is provided with a first channel, another of the first movable component and the first fitting component is movably fitted in the first channel and abuts against an inner wall surface of the first channel, one of the second movable component and the second fitting component is provided with a second channel, another of the second movable component and the second fitting component is movably fitted in the second channel and abuts against an inner wall surface of the second channel, the first movable component is rotatable around its own axis, so that damping occurs between the damping assembly and the first movable component, and the second movable component is rotatable around its own axis, so that damping occurs between the damping assembly and the second movable component.

2. The hinge assembly according to claim 1, wherein the first movable component is a first cylindrical rotating shaft, the first fitting component is provided with the first channel, an inner diameter of the first channel is smaller than an outer diameter of the first cylindrical rotating shaft, and the damping assembly is provided with a first opening communicating with the first channel; and
the second movable component is a second cylindrical rotating shaft, the second fitting component is provided with the second channel, an inner diameter of the second channel is smaller than an outer diameter of the second cylindrical rotating shaft, and the damping assembly is provided with a second opening communicating with the second channel.

3. The hinge assembly according to claim 2, wherein the first opening passes through the first channel along an axial direction of the first channel, and the second opening passes through the first channel along an axial direction the second channel.

4. The hinge assembly according to claim 2, wherein a first plane is formed on an outer peripheral surface of the first cylindrical rotating shaft through edge-cutting, a cross-section of the first cylindrical rotating shaft is in a major arc arch shape, a second plane is formed on an outer peripheral surface of the second cylindrical rotating shaft through edge-cutting, and a cross-section of the second cylindrical rotating shaft is in a major arc arch shape.

5. The hinge assembly according to claim 1, further comprising:
a first transmission component, wherein the first transmission component is disposed on the first movable component and moves synchronously with the first movable component;
a second transmission component, wherein the second transmission component is disposed on the second movable component and moves synchronously with the second movable component; and
a third transmission component, wherein the third transmission component is disposed on the support base, and the third transmission component is fitted with the first transmission component and the second transmission component, so that the first transmission component and the second transmission component move synchronously.

6. The hinge assembly according to claim 5, wherein the first transmission component and the second transmission component are gears disposed in parallel, the third transmission component is a gear, and an axis of the third transmission component is perpendicular to an axes of the first transmission component and the second transmission component.

7. The hinge assembly according to claim 6, wherein the first transmission component is provided with first meshing teeth, the second transmission component is provided with second meshing teeth, the first meshing teeth extend obliquely relative to the axis of the first transmission component, and the second meshing teeth extend obliquely relative to the axis of the second transmission component.

8. The hinge assembly according to claim 5, wherein the first transmission component is a first transmission gear, the second transmission component is a second transmission gear, the third transmission component comprises a third transmission gear and a fourth transmission gear meshing with each other, the third transmission gear meshes with the first transmission gear, and the fourth transmission gear meshes with the second transmission gear.

9. The hinge assembly according to claim 8, wherein axes of the first transmission gear, the second transmission gear, the third transmission gear and the fourth transmission gear are parallel to each other.

10. The hinge assembly according to claim 1, wherein the first mounting component or the second mounting component comprises:
a hinge rotating component, wherein the hinge rotating component is disposed on the first movable component or the second movable component, and moves synchronously with the first movable component or the second movable component; and
a rotating connecting piece, wherein the rotating connecting piece is connected with the hinge rotating component, and the rotating connecting component is connected with the first section or the second section.

11. An electronic device, comprising a flexible screen, a first section, a second section and the hinge assembly according to any one of claims 1 to 10, wherein the first section is connected to the first mounting component, the second section is connected to the second mounting component, and the flexible screen covers the first section, the hinge assembly and the second section.
